# EUROPEAN PATENT APPLICATION

(11) **EP 4 796 254 A1**
(43) Date of publication of application: **26.08.2026**
(21) Application number: 26157771.2
(22) Date of filing: 11.02.2026
(51) Int. Cl.: B23Q 1/01, B23Q 11/00

(54) **MACHINE FOR WORKPIECE MACHINING AND OPERATING METHOD**

(30) Priority: 19.02.2025 IT 202500003189
(71) Applicant: SCM Group S.p.A., 47921 Rimini (RN) (IT)
(72) Inventor: CECCONI, Simone, 47921 RIMINI (IT)
(74) Representative: Tiburzi, Andrea

(57) **Abstract**

The present invention relates to a machine (1) for machining workpieces (P), such as panels (P) made of wood, fiberglass, plastic, and similar materials, comprising a worktable (2), extending along a main direction (X), on which the workpieces (P) to be machined can be placed, and a gantry (3) comprising machining tools to perform operations on said workpiece (P) that generate machining residues, wherein said gantry (3) is movable along a movement direction (A) in two opposite directions.

The present invention also relates to a cleaning unit (4) and a method for collecting machining residues.

## Description

The present invention relates to an improved machine for machining workpieces, a cleaning unit, and an operating method.

### Field of the invention

More specifically, the invention relates to a cleaning unit for machine tools for collecting machining residues during the operation of the machine.

In the following, the description will be directed to the cleaning of chips, but it is clear that it should not be considered limited to this specific use.

### Prior art

Currently, machine tools for machining panels of wood and other materials have seen considerable progress in terms of precision, speed, and automation.

These systems are widely used in various industrial sectors, such as in construction or for the production of components and finished products.

Current machine tools are typically equipped with a worktable on which the workpieces to be machined are placed and a mobile gantry that houses the tools for cutting, milling, drilling, and other operations.

During the machining process, residues such as chips, dust, and other debris are generated. These residues accumulate on the worktable and in the surrounding areas, creating potential operational and safety problems. The accumulation of debris can interfere with the precision of the machining, cause premature wear of the machine components, and potentially pose a health risk to operators.

Traditional methods for managing machining residues involve periodically interrupting the production process to allow for manual cleaning or the use of suction systems. However, these solutions have some limitations. Interruptions for cleaning reduce production efficiency and increase machine downtime. Fixed suction systems, on the other hand, may not be able to effectively collect residues in all work areas.

The management of machining residues also has implications for the quality of the work environment and compliance with regulations on industrial safety and hygiene. Prolonged exposure to dust and particles can have negative effects on the health of operators, making an effective system for the timely removal of residues essential.

There is therefore a felt need for a system that overcomes one or more of these problems.

### Objects of the invention

In light of the above, it is, therefore, an object of the present invention to provide a mobile suction system for machine tools that allows for the continuous collection of machining residues.

Another object of the invention is to improve the production efficiency of machine tools by reducing downtime due to cleaning operations.

It is also an object of the present invention to offer a suction system capable of adapting to the movements of the machine tool's gantry, ensuring effective collection from the work areas surrounding the machine.

It is also an object of the present invention to improve the quality of the work environment and compliance with regulations on industrial safety and hygiene, by reducing operators' exposure to dust and particles.

Another object of the invention is to offer a suction system that can be easily integrated into existing machine tools without requiring substantial modifications to their structure.

### Object of the invention

It is, therefore, specific object of the present a machine for machining workpieces, such as panels of wood, fiberglass, plastic, and the like, comprising a worktable, which extends along a main direction, on which the workpieces to be processed can be arranged, and a gantry comprising machining members for performing machining operations on said workpiece that generate machining residues, wherein said gantry is movable along a movement direction in two opposite directions, wherein said machine comprises at least one cleaning unit configured to continuously collect and suction said machining residues from the floor surrounding said worktable, generated by the machining of said workpiece by said machining members during the relative movement of said gantry with respect to said worktable, wherein said cleaning unit is integral with said gantry.

Always according to the invention, the cleaning unit may be configured to collect machining residues from the floor surrounding the worktable when the gantry is movable along the movement direction in both directions of movement.

Still according to the invention, the cleaning unit may comprise a suction shuttle for the suction of machining residues and a suction duct, connected to the suction shuttle, for collecting and conveying the machining residues, and the machine can comprise suction means connected to the suction duct.

Preferably according to the invention, the suction shuttle may comprise a support frame having a bar provided with two ends, wherein the bar can be arranged transversely with respect to the movement direction, and under the support frame a collection area for the machining residues can be defined to be suctioned through the suction duct; at least one conveying member, coupled to at least one of the ends or to both, wherein each conveying member can comprise a pair of inclined sides so as to collect the machining residues and accumulate them in the collection area when the cleaning unit moves in both directions of the gantry's movement direction; and a coupling bushing coupled to the suction duct, wherein the coupling bushing can be in fluid-dynamic connection with the support frame so as to remove the machining residues from the collection area.

Further according to the invention, the bar may comprise at least one opening, and the coupling bushing can comprise a manifold pipe and at least one or two connecting ducts, couplable to a respective opening of the bar, wherein the connecting ducts can be in fluid-dynamic connection with the manifold.

Advantageously according to the invention, on the sides of the conveying member, rubber strips can be provided for scraping the surface during the collection of machining residues.

Preferably according to the invention, the conveying member may comprise rolling means, such as wheels and the like, and the bar can comprise an adjustable deflector.

Further according to the invention, the cleaning unit may be capable of assuming a retracted position and an operating position, in which it can collect the machining residues from the floor surrounding the worktable.

Furthermore according to the invention, the suction shuttle may comprise a sliding carriage fixed to the support frame, a fixing flange fixed to the gantry, slidably coupled to the sliding carriage, and a pneumatic actuator fixed between the fixing flange and the sliding carriage, wherein the pneumatic actuator can be adapted, upon command, to move the sliding carriage with respect to the fixing flange, so as to cause the suction shuttle to pass from the retracted position to the operating position and vice versa.

Advantageously according to the invention, the coupling bushing can comprise a butterfly valve, arranged in the manifold pipe, functionally coupled to the pneumatic actuator, wherein the coupling bushing can open when the suction shuttle passes from the retracted position to the operating position, and can close when the suction shuttle passes from the operating position to the retracted position.

Still according to the invention, the machine may comprise one cleaning unit arranged on each side of the worktable.

It is further object of the present invention a cleaning unit for the continuous collection and suction of machining residues, wherein said cleaning unit is couplable in an integral manner to the gantry of a machine for machining workpieces, such as panels of wood, fiberglass, plastic, and the like, wherein said machine comprises a worktable, which extends along a main direction, on which the workpieces to be processed can be arranged, and a gantry movable along a movement direction in two opposite directions. Said cleaning unit is configured to continuously collect and suction said machining residues from the floor surrounding said worktable generated by the machining of said workpiece by said machining members during the relative movement of said gantry with respect to said worktable, wherein said cleaning unit is integral with said gantry.

Still according to the invention, the cleaning unit can be configured to collect machining residues from the floor surrounding the worktable when the gantry is movable along the movement direction in both directions of movement.

It is also object of the present invention a method for collecting machining residues of a cleaning unit according to the invention, which can comprise the following steps: causing the suction shuttle to pass from the retracted position to the extended position, by activating the actuator; moving the gantry to perform the machining of a workpiece; collecting the machining residues from the floor by means of at least one conveying member of the suction shuttle, accumulating them in the collection area; and suctioning the machining residues from the collection area through the suction duct.

### Brief description of the figures

The present invention will be now described, for illustrative but not limitative purposes, according to its preferred embodiments, with particular reference to the figures of the enclosed drawings, wherein:
figure 1 illustrates a perspective view of a machine for machining workpieces, according to the present invention;
figure 2 shows a front view of the machine of figure 1;
figure 3 illustrates an isometric view of a cleaning unit, according to an embodiment of the present invention;
figure 4 shows an exploded perspective view of the cleaning unit of figure 3;
figure 5 illustrates a rear perspective view of the cleaning unit along the line A-A of figure 3;
figure 6 shows a cross-sectional view along the section line A-A of the cleaning unit of figure 3;
figure 7 presents an isometric view of the cleaning unit of figure 3;
figure 8 illustrates a detail of figure 7;
figure 9A shows the cleaning unit in the rest configuration; and
figures 9B and 9C show the cleaning unit in the working configuration.

### Detailed description

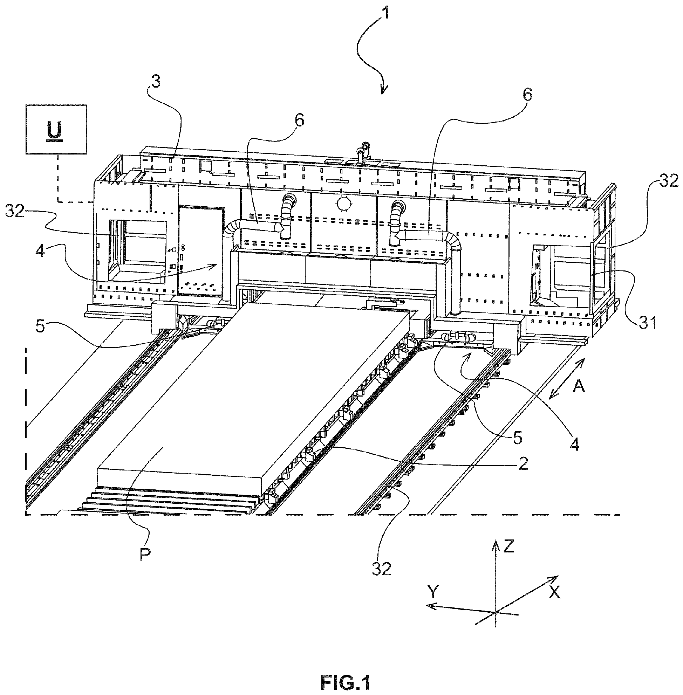

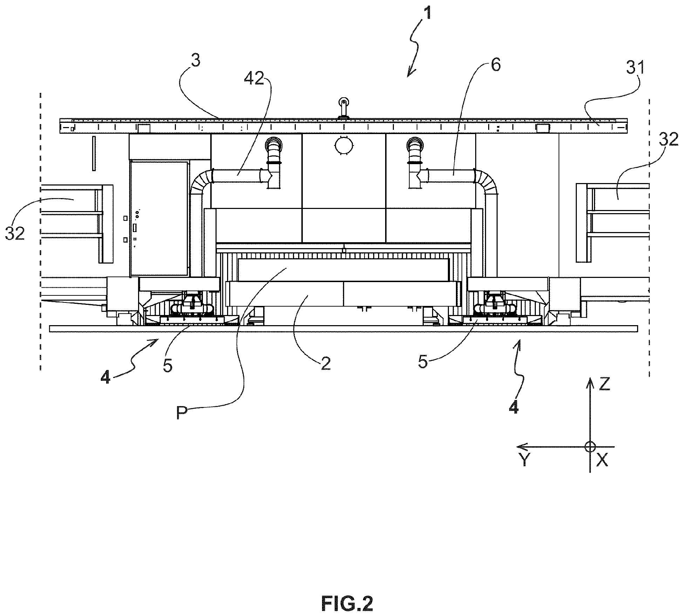

With reference to figures 1 and 2, a mobile suction system is illustrated for a machine 1 for machining workpieces P such as panels of wood, fiberglass, plastic, and the like.

The machine 1 comprises a worktable 2 that extends along a main direction (i.e., in direction A, parallel to the X-axis of the Cartesian coordinate system XYZ) on which the workpieces P to be processed can be arranged, which in the figure are wood panels P.

In some variants, the worktable 2 can be configured as a bar-type table, on which the workpieces to be machined are arranged. This type of worktable 2 offers versatility, allowing pieces of different sizes and shapes to be fixed.

In another variant, the worktable 2 can be of the beam type, for supporting particularly heavy and bulky workpieces P. The beams can also be made of sacrificial beams, generally made of wood.

Both indicated configurations of the worktable can be equipped with clamping devices, such as clamps and suction cups, to ensure stability during machining operations, especially for small workpieces.

The machine 1 also comprises a gantry 3 movable along a movement direction indicated by the double-headed arrow A, equipped with machining members (not shown in the figure) for performing machining operations on the workpiece P.

The gantry 3 is capable, in particular, of moving along the movement direction A in two opposite directions. During the machining of the workpiece P, which in the figure is a panel, the machining members generate machining residues that reach the sides of the worktable 2.

The gantry 3 is equipped with a casing 31 with windows 32 for visual inspection by the operator of the machining members, ensuring greater safety during machining operations. This allows the operator to monitor the machining process without having to interrupt the work cycle.

Furthermore, the gantry 3 is movable along direction A on rails 33 fixed to the ground. The gantry 3 is movable along said rails 33 by means of electric motors (not shown in the figure).

The gantry 3, the machining members, and the motors for moving the gantry 3 are controlled by a control logic unit U. The control logic unit U can be programmable and thus configured in various ways to optimize the operation of the machine 1.

In a first variant, the control logic unit U is a programmable logic controller (PLC) that manages the operating sequences of the machine 1, synchronizing the movement of the gantry 3, the operation of the machining members, and the activation of the cleaning unit 4, as better defined below. The PLC can be programmed with various predefined routines to adapt to specific machining operations.

Alternatively, the control logic unit U can be a CNC (Computer Numerical Control) system that offers control of the gantry 3 axes and the machining members. The CNC can be interfaced with CAD/CAM software to perform complex machining on the workpieces P, ensuring high precision and repeatability.

The cleaning unit 4 is configured to collect machining residues when the gantry 3 moves in both directions of the movement direction A. This allows for continuous cleaning of the work area surrounding the worktable 2 during the entire movement cycle of the gantry 3.

In particular, the cleaning units 4 are fixed to the gantry 3, moving integrally with it, as it slides on the rails 33.

As illustrated in figure 2, each cleaning unit 4 comprises a suction shuttle 5 for the suction of machining residues generated by the machining members.

The suction shuttle 5 is positioned in operation near the floor on which the machine 1 is placed for effective collection of debris.

The cleaning unit 4 also comprises a suction duct 6, connected to the suction shuttle 5 to convey the machining residues and transfer them. The suction duct 6 is fixed to the gantry 3 and generally connected to appropriate collection containers for the chips.

The machine 1 internally comprises suction means (not shown in the figures) connected to the suction duct 6 to create the necessary airflow for the removal of residues. The suction means can be positioned in an area even remote from the machine 1 to optimize the workspace.

In some configurations, the machine 1 may comprise a cleaning unit 4 arranged on each side of the worktable 2. This arrangement allows for complete coverage of the work area from which to collect residues, ensuring effective cleaning on both sides of the machine 1, i.e., of the worktable 2.

The cleaning unit 4 operates simultaneously with the machining steps that the machine 1 performs by means of the machining members, constantly keeping the areas adjacent to the worktable 2 clean. This functionality allows for the reduction of machine downtime for cleaning operations, increasing overall production efficiency.

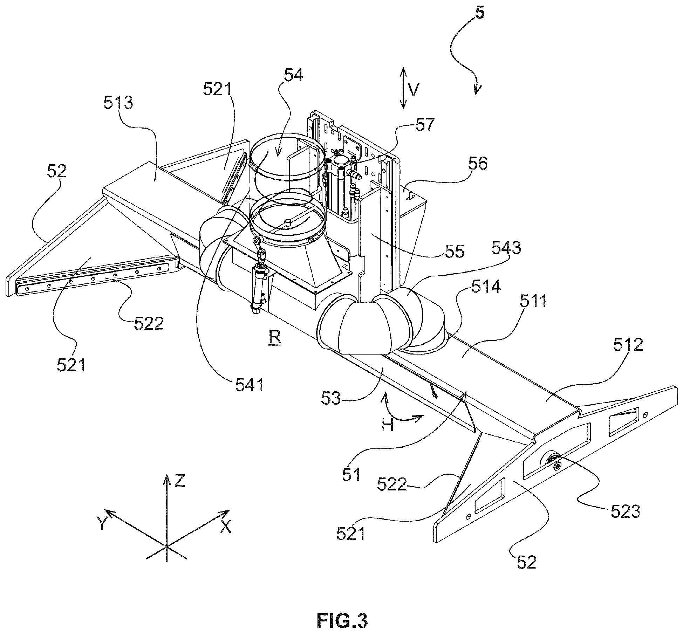

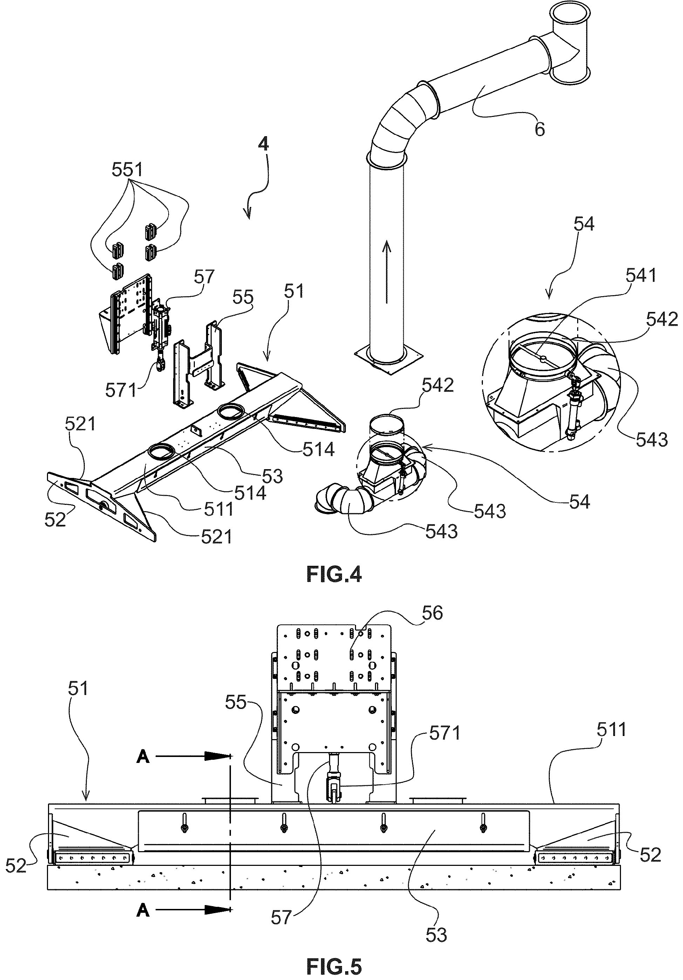

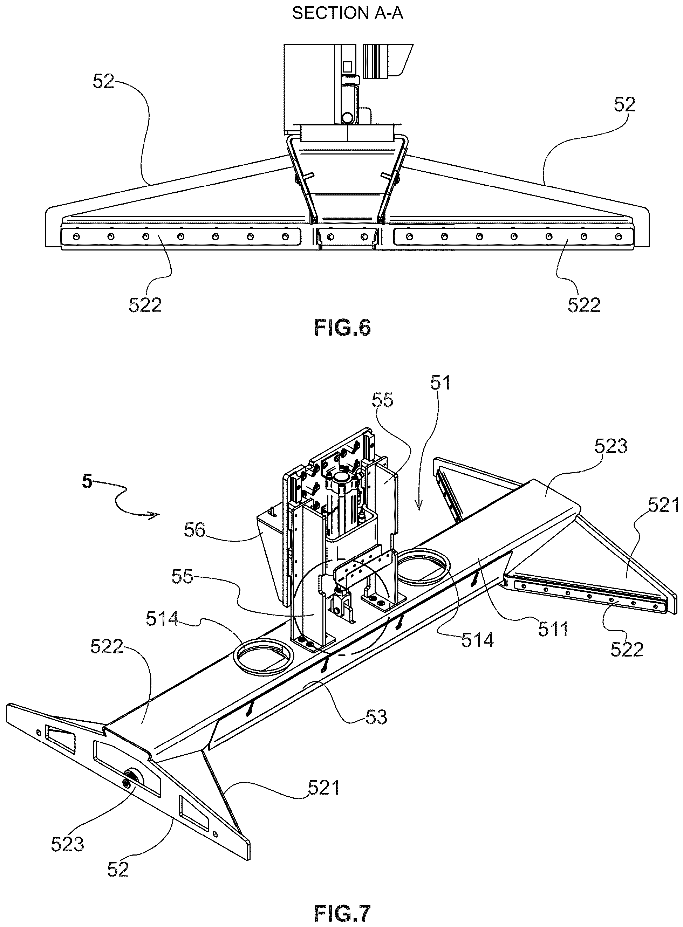

As always shown in figure 3 and in the subsequent figures 4-8 (in which the cleaning unit 4 is illustrated in orthogonal and exploded views showing the arrangement of the main components from different perspectives), the cleaning unit 4 comprises a suction shuttle 5, consisting of various components for the collection and suction of machining residues.

The suction shuttle 5 comprises a support frame 51, which extends horizontally and acts as the main structural element. The support frame 51 comprises a bar 511 provided with two ends 512 and 513. Below the bar 511, a collection area R is defined, in which the machining residues are collected.

The bar 511 has an elongated shape and is arranged transversely with respect to the advancement direction A of the gantry 2 and, therefore, since each cleaning unit 4 is integral with and fixed to the gantry 3, it moves when the gantry 3 is moved to allow the machining members to machine the panel or workpiece P.

The suction shuttle 5 comprises two conveying members 52 coupled to a respective one of the ends 512 and 513.

In other embodiments, the suction shuttle 5 may comprise only one conveying member 52.

The conveying member 52 has inclined sides 521, arranged so as to converge inwards to collect and direct the flow of material into the collection area R. The inclined sides 521 are equipped on both sides with rubber strips 522 along the lower edges to improve the collection of machining residues, which, for wood panels P, consist of sawdust, dust, and chips.

The inclination of the sides 521 helps the collection of chips from the floor and their gradual accumulation in the collection area R while the gantry 3 is in motion and the machining members are working on the panel P, to then allow for their suction.

The conveying member 52 is also equipped with wheels 523 to allow its mobility while the gantry 3 is being moved.

The suction shuttle 5 comprises an adjustable deflector 53 connected to the support frame 51, to allow cleaning of the support frame 51 and/or to permit the collection of coarser pieces. The adjustable deflector 53 moves according to the arrow H.

The suction shuttle 5 also comprises a coupling bush 54, which connects the suction shuttle 5 to the suction duct 6. The coupling bush 54 comprises a manifold pipe 542 and two connecting ducts 543 for the transfer of the suctioned residues.

A butterfly valve 541 is integrated into the system, operating and arranged in the manifold pipe 542. The butterfly valve opens when necessary, when the collected machining residues need to be suctioned.

In one embodiment, the butterfly valve 541 can be operatively connected to and controlled by the control unit U.

The suction shuttle 5 comprises a sliding carriage 55 fixed to the support frame 51, and a fixing flange 56, which allows linear movement of the suction shuttle 4, as better described below.

In particular, the sliding carriage 55 is fixed to the bar 511 by means of bolts or the like, but in other embodiments it can be welded.

A pneumatic actuator 57 is installed to control and operate the movement of the suction shuttle 5. The pneumatic actuator 57 is equipped with a hook 571 for attachment to the support frame 51 of the suction shuttle 5.

A spiral tube 541, whose function will be better defined below, is arranged in the manifold pipe 542.

The bar 511 of the support frame 51 comprises at least one opening 514. In the embodiment under consideration, the bar 511 has two circular-shaped openings 514, arranged on top.

The coupling bush 54 comprises one or two connecting ducts 543 that can be coupled to a respective opening 514 of the bar 511. These connecting ducts 543 are in fluid-dynamic connection with the manifold pipe 542.

The cleaning unit 4 can assume a retracted position and an operating position for collecting residues. In particular, the suction shuttle 5 moves in the direction of the double-pointed arrow V, which is parallel to the Z-axis of the Cartesian coordinate system XYZ, where the plane formed by the X-Y axes is parallel to the worktable 2, and the Z-axis is perpendicular to the worktable 2 and therefore to the plane on which the machine 1 is placed.

The pneumatic actuator 57 is configured to move the sliding plate 56 with respect to the support frame 51, allowing the suction shuttle 5 to pass from the retracted position to the operating one and vice versa. The spiral tube 541 of the coupling bush 54 can lengthen and shorten when the suction shuttle 5 passes from the retracted position to the operating one and vice versa, adapting to the position.

In one embodiment, the butterfly valve 541, which, as mentioned, is arranged in the manifold pipe 542, is functionally coupled to the pneumatic actuator 57. The butterfly valve 541 opens when the suction shuttle 5 passes from the retracted position to the operating one, and closes in the reverse movement.

The suction duct 6 extends vertically from the suction shuttle 5, forming a curve in its upper portion.

The sliding carriage 55 allows the vertical movement of the suction shuttle 4 while maintaining the connection between the suction duct 6 and the suction shuttle 5. The sliding carriage is slidably coupled to a fixing flange 56, which in turn is fixed by fixing means such as screws and the like, to the gantry 3 of the machine 1.

The sliding carriage 55 is slidably coupled to the fixing flange 56 by means of sliding blocks 551.

The pneumatic actuator 57 is interposed and connected between the fixing flange 56 and the support frame 51, and in particular to the bar 511. In particular, the pneumatic actuator 57 comprises a hook 571 fixed to the bar 511.

The pneumatic actuator 57 can be functionally connected to and controlled by said control logic unit U.

In other embodiments, the actuator 57 can be electric or hydraulic.

The method for collecting the machining residues by means of the suction unit 4 develops through a sequence of operational steps that allow for an effective and automated removal of the residues generated during the machining of a workpiece P.

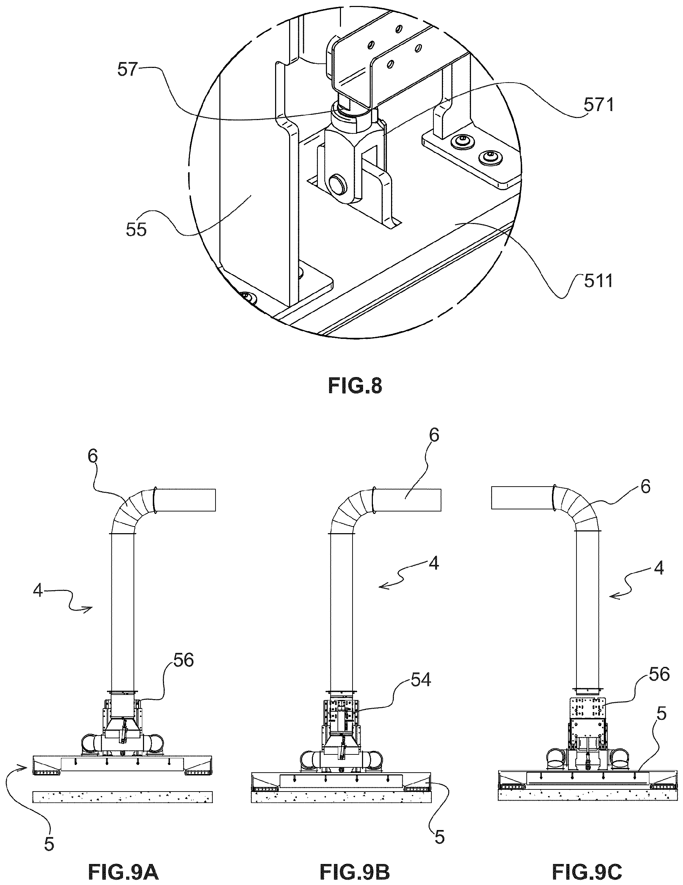

In a first step, the suction shuttle 5 is moved from the retracted position to the extended position by activating the pneumatic actuator 57, by means of a signal from the control logic unit U. This movement is controlled so as to ensure correct positioning of the suction shuttle 5 with respect to the collection surface, avoiding interference with the other elements of the machine. In this way, the suction shuttle 5 passes from the retracted position, shown in figure 9A, to an operating position, shown in figures 9B and 9C in two opposite perspectives.

Subsequently, the gantry 3 is moved according to the machining cycle of the workpiece P, ensuring that the machining residues are generated and deposited in the area below, where the suction shuttle 5 is positioned to collect them.

In the collection step, the conveying members 52 present on the suction shuttle 5 come into contact with the floor of the work area, facilitating the accumulation of machining residues in the collection area R.

The conveying members 52, in other embodiments, can also comprise rotating brushes, flexible blades, or other devices suitable for ensuring effective movement of the residues towards the collection area R, minimizing their dispersion into the surrounding environment.

Finally, the residues accumulated in the collection area R are suctioned through the suction duct 6, which is connected to a suction unit that generates the necessary vacuum for transporting the collected materials towards a filtering and collection system.

In this way, the method allows the working area to be kept clean, improving the efficiency of the production process and reducing the risk of contamination or accumulation of debris in the operational zones.

The implementation of the described method allows for the automation of the cleaning process, reducing manual intervention and ensuring high repeatability of operations, with a consequent improvement in working conditions and the reliability of the entire machining system.

### Advantages

An advantage of the present invention is to provide a mobile cleaning unit for machine tools that allows for the continuous collection of machining residues during the operation of the machine, without the need for interruptions for cleaning.

Another advantage of the present invention is to improve the production efficiency of machine tools by reducing downtime due to cleaning operations.

It is also an advantage of the present invention to offer a cleaning device capable of adapting to the movements of the machine tool's gantry, ensuring effective collection of residues in all work areas.

Another advantage of the present invention is to provide a flexible suction system, capable of effectively managing machining residues of different sizes and compositions.

It is also an advantage of the present invention to improve the quality of the work environment and compliance with regulations on industrial safety and hygiene, by reducing operators' exposure to dust and particles, as well as the risk of fires.

Another advantage of the present invention is to offer a suction system that can be easily integrated into existing machine tools without requiring substantial modifications to their structure.

It is also an advantage of the present invention to provide a suction system that can operate in both directions of movement of the machine tool's gantry.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (1) for machining workpieces (P), such as panels (P) made of wood, fiberglass, plastic, and similar materials, comprising:
a worktable (2), extending along a main direction (X), on which the workpieces (P) to be machined can be placed; and
a gantry (3) comprising machining tools to perform operations on said workpiece (P) that generate machining residues, wherein said gantry (3) is movable along a movement direction (A) in two opposite directions;
**characterized**
**by** comprising at least one cleaning unit (4) configured to continuously collect and suction said machining residues from the floor surrounding said worktable (2), generated by the machining of said workpiece (P) by said machining tools during the relative movement of said gantry (3) with respect to said worktable (2),
wherein said cleaning unit (4) is attached to said gantry (3).

2. Machine (1) according to claim 1, **characterized in that** said cleaning unit (4) is configured to collect machining residues from the floor surrounding said worktable (2) when said gantry (3) is movable along said movement direction (A) in both directions.

3. Machine (1) according to any one of the preceding claims, **characterized**
**in that** said cleaning unit (4) comprises
a suction shuttle (5) for suctioning said machining residues, and
a suction duct (6) connected to said suction shuttle (5) for collecting and conveying said machining residues, and
**in that** said machine (1) comprises suction means connected to said suction duct (6).

4. Machine (1) according to the preceding claim, **characterized in that** said suction shuttle (5) comprises:
a support frame (51) having a bar (511) provided with two ends (512, 513),
wherein said bar (511) is arranged transversely with respect to said movement direction (A), and
wherein beneath said support frame (51) is defined a collection area (R) for said machining residues to be suctioned through said suction duct (6);
at least one conveying member (52), coupled to at least one of said ends (512, 513), or to both ends (512, 513), wherein each conveying member (52) comprises a pair of sides (521) inclined to collect said machining residues and accumulate them in said collection area (R) when said cleaning unit (4) moves in both directions of said movement direction (A) of said gantry (3); and
a coupling bush (54) coupled to said suction duct (6), wherein said coupling bush (54) is in fluid communication with said support frame (51) to draw said machining residues from said collection area (R).

5. Machine (1) according to the preceding claim, **characterized**
**in that** said bar (511) comprises at least one opening (514),
**in that** said coupling bush (54) comprises
a collector pipe (542), and
at least one or two connecting ducts (543), couplable to a respective opening (514) of said bar (511), wherein said connecting ducts (543) are in fluid communication with said collector (542).

6. Machine (1) according to any one of claims 4 or 5, **characterized in that** rubber strips (522) are provided on said sides (521) of said conveying member (52) for scraping the surface during the collection of said machining residues.

7. Machine (1) according to any one of claims 4-6, **characterized**
**in that** said conveying member (52) comprises rolling means, such as wheels (523) and similar, and
**in that** said bar (511) comprises an adjustable deflector (53).

8. Machine (1) according to any one of the preceding claims, **characterized in that** said cleaning unit (4) is capable of assuming a retracted position and an operational position, wherein it collects said machining residues from the floor surrounding said worktable (2).

9. Machine (1) according to any one of the preceding claims, when dependent on claim 3, **characterized in that** said suction shuttle (5) comprises
a sliding carriage (55), fixed to said support frame (51),
a fastening flange (56) fixed to said gantry (3), slidably coupled to said sliding carriage (55), and
a pneumatic actuator (57), fixed between said fastening flange (56) and said sliding carriage (55), wherein said pneumatic actuator (57) is configured, upon command, to move said sliding carriage (55) relative to said fastening flange (56), so as to move said suction shuttle (5) from said retracted position to said operational position and vice versa.

10. Machine (1) according to the preceding claim, when dependent on claim 4, **characterized**
**in that** said coupling bush (54) comprises a butterfly valve (541), arranged in said collector pipe (542), functionally coupled to said pneumatic actuator (57),
wherein said coupling bush (54) opens when said suction shuttle (5) moves from said retracted position to said operational position, and closes when said suction shuttle (5) moves from said operational position to said retracted position.

11. Machine (1) according to any one of the preceding claims, **characterized in that** it comprises a cleaning unit (4) arranged on each side of said worktable (2).

12. Cleaning unit (4) for the continuous collection and suction of machining residues,
wherein said cleaning unit is couplable in an attached manner to the gantry (3) of a machine (1) for machining workpieces (P), such as panels (P) made of wood, fiberglass, plastic, and similar materials, wherein said machine (1) comprises a worktable (2), extending along a main direction (X), on which the workpieces (P) to be processed can be placed, and a gantry (3) movable along a movement direction (A) in two opposite directions,
**characterized in that** said cleaning unit is configured to continuously collect and suction said machining residues from the floor surrounding said worktable (2) generated by the machining of said workpiece (P) by said machining tools during the relative movement of said gantry (3) with respect to said worktable (2),
wherein said cleaning unit (4) is attached to said gantry (3).

13. Cleaning unit (4) according to the preceding claim, **characterized in that** it is configured to collect machining residues from the floor surrounding said worktable (2) when said gantry (3) is movable along said movement direction (A) in both directions.

14. Method for collecting machining residues with a cleaning unit (4) according to any one of claims 12 or 13, comprising the following steps:
moving said suction shuttle (5) from said retracted position to said extended position by activating said actuator (57);
moving said gantry (3) to perform the machining of a workpiece (P);
collecting the machining residues from the floor using said at least one conveying member (52) of said suction shuttle (5), accumulating them in said collection area (R); and
suctioning the machining residues from said collection area (R) through said suction duct (6).
